Europäisches Patentamt

European Patent Office

Office européen des brevets

(11) Publication number: **0 497 145 A1**

# EUROPEAN PATENT APPLICATION

(21) Application number: **92100593.0**

(22) Date of filing: **15.01.92**

(51) Int. Cl.5: **G09B 29/10, G03B 21/30**

Priority: 280191 IT MI91000197.

(30) Priority: **28.01.91**

(43) Date of publication of application:
**05.08.92 Bulletin 92/32**

(84) Designated Contracting States:
**AT BE CH DE ES FR GB LI NL**

(71) Applicant: **Girardi, Rocco**
**Via A. Diaz 61**
**I-20063 Cernusco Sul Naviglio, Milan(IT)**

(72) Inventor: **Girardi, Rocco**
**Via A. Diaz 61**
**I-20063 Cernusco Sul Naviglio, Milan(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) Hand-held device for reading microfilms bearing in particular maps of regions, town or countries.

(57) A hand-held device (1) for reading microfilms (9),in particular bearing maps of regions, towns or countries, said microfilms (9) being arranged on belts associated with suitable removable supporting elements (8), where they can be wound or unwound at will, comprises a supporting element (4) having a reduced size in order to facilitate the transportation thereof and its use advantageously within a motor vehicle compartment, with said supporting element (4) being associated driving means (18) adapted to unwind or re-wind the microfilm (9) tape, optical means (19) for projecting the microfilm (9) on at least a display (12) and control and search means (51) for controlling the operation of the driving means (18) and optical means (19), said control means (51) controlling, depending on a requirement of an user submitted through at least an interface (52), individializing means (49) adapted to give prominence on the display (12) to a specific portion thereof corresponding to the requirement of the user.

Fig. 1

The present invention relates to a hand-held device for reading microfilms, bearing in particular maps of regions, towns or countries.

As is known, as the requirement arises of precisely locating a locality or a road, for example in a town, it is necessary to consult a map.

Accordingly, the use of these maps is at present very extensive.

Such a procedure, however, is affected by great limitations and drawbacks.

At first, in fact, the mentioned use has a poor value because of the size of the maps. In fact, the latter have frequently a size of approximatively 1 $m^2$ and, accordingly, they are supplied in a folded condition in order to reduce the size thereof to a smaller size adapted to be easily handled.

In order to consult these maps, accordingly, an user, in particular in the compartment of a motor vehicle and the like, must fully open the map and locate the zone of intereset thereon, and then he must close again the map about the located zone, thereby altering the proper folding arrangement of the map, which will originate serious problems for properly re-folding the map at the storing time thereof.

Due to the fact that the map is folded according to preset folding lines, the map has a very short duration, since the folding lines are susceptible to be broken within a time which is directly dependent on the good quality of the material used for making the map, which time, anyhow, is a comparatively short one.

To the foregoing it is to be added that the search of the desired locality completely depends on the user's skillness.

For performing such a search, the user must consult an index usually provided on the back of the map, or supplied as a separated item, and thereon the user must find the coordinates relating to the map portion including the desired locality.

After having located the desired portion of the map, the user must locate the precise locality within the mentioned portion.

Such a searching system is common to all of the known map arrangements, included the so-called road atlas which solve only in a partial way the above mentioned drawbacks, but require a more complex search since they usually include a plurality of pages (they are actually book like elements).

Such a search, as stated, is very complex and in performing it, the user must continuously compare the index and map, which comparing is frequently very difficult to be carried out, especially as the index is arranged on the back of the map.

There are also known devices for locating geographic zones which operate by processing data received from a suitable satellite.

While these devices solve some problems related to the geographic maps, they have a high cost and, accordingly, can not be purchased by a lot of possible users.

Accordingly, the main object of the present invention is to provide a device allowing to locate desired geographic zones in a very simple and quick way.

Another object of the present invention is to provide a device of the above mentioned type which is adapted to use microfilm tapes bearing, in a micro-filmed arragement, geographic maps of towns, regions or countries, said tapes, in particular, being of the type of those constituting the subject matter of a prior patent application in the name of the same Applicant.

Another object is to provide a device of the above mentioned type which can be easily transported and used, in particular in a motor vehicle, for example a car.

Another object of the present invention is to provide a device of the above mentioned type which has a very reduced cost accessible for a great number of possible users.

These and yet other objects, which will become more apparent to those skilled in the art, are achieved by a hand-held device for reading microfilms, bearing in particular maps of regions, towns or countries, said microfilms being arranged on tapes supported on removable supporting elements where they can be wound or unwound at will, characterized in that said device comprises a supporting element having a small size adapted to facilitate the transport and use of said device advantageously in a compartment of a motor vehicle, with said supporting element there being associated driving means for unwinding or re-winding said microfilm tapes, optical means for projecting said microfilm on at least a display and control and search means for controlling said driving and optical means, said control means controlling, depending on a requirement of an user submitted through at least an interface, said means in order to locate a portion of said tape corresponding to said requirement and to display said portion on said display.

The invention will become more apparent from the following disclosure with reference to the accompanying exemplary and not limitative drawings, where:

Figure 1 is a schematic perspective view of the device according to the invention;

Figure 2 is a cross-sectional view taken along the line 2-2 of Figure 1;

Figure 3 illustrates a block diagram of a control circuit for controlling the device of Figure 1;

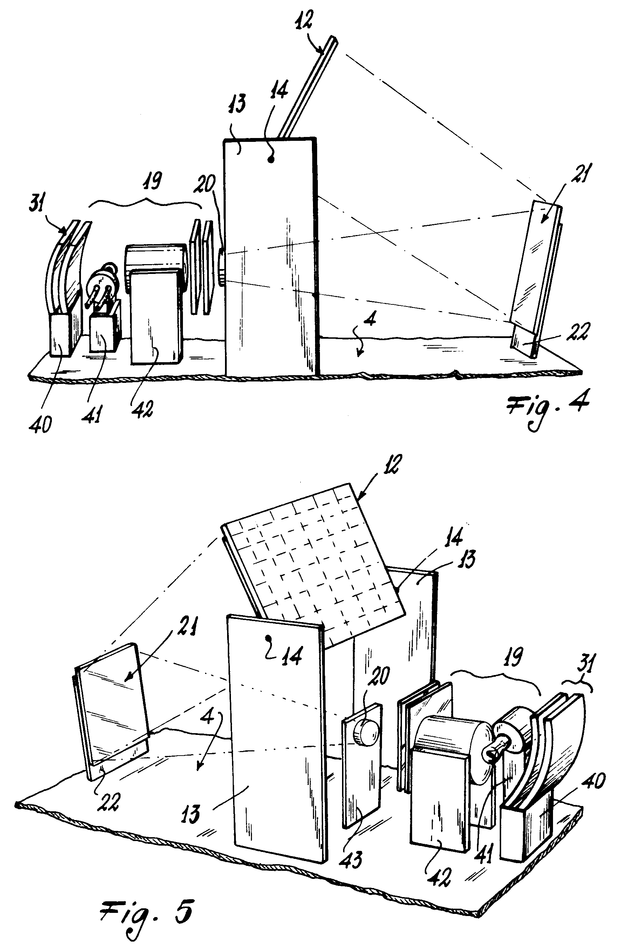

Figure 4 is a side view, with some portions omitted for a better clearness, of the device of Figure 1; and

Figure 5 is a perspective view, with some parts omitted for a better clearness, of the device of Figure 1.

With reference to the above mentioned figures, the device according to the invention has been generally indicated at 1 and comprises, in the exemplary embodiment being disclosed, a box-like body 2 having a top portion 3 and a bottom or supporting element or base 4.

On the top portion 3 there is provided a first recess 5 therein there are arranged toothed shafts 6 adapted to cooperate with conventional gear wheels 7 of a box 8 or supporting element for a microfilmed tape 9, bearing photos of a geographic map, for example of a town. The box 8 is of a per se known type, and, for example, it can be of the type of that disclosed in a prior patent application in the name of the same Applicant, said box being provided with a recess 10.

On the portion 3 of the body 2 there is moreover provided a second recess 11, therefrom a screen 12 projects.

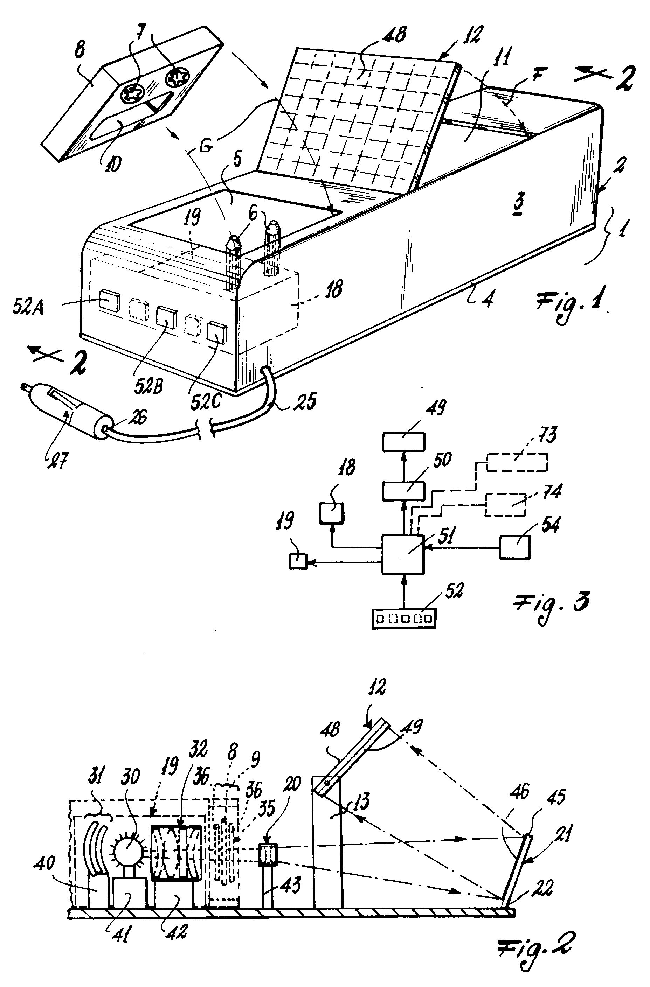

This screen or display element 12 is supported by side uprights 13 extending from the base 4. More specifically, the display element 12 is pivoted at 14 on the uprights 13 so that it can pivot with respect to the latter so as to be withdrawn, as desired, from the above mentioned recess 11 (see the arrow F of figure 1).

The base 4 supports furthermore: an electric motor 18 which is advantageously supplied by a low voltage supply; a projector element 19, an objective 20 and at least a reflecting element 21 supported by a bed 22.

More specifically, the electric motor 18 is provided for driving, in a known way, the above mentioned shafts 6. The motor is supplied through a supplying cable 25 extending from the body 2 and advantageously provided, at one end 26 thereof, with a conventional plug element 27 provided for cooperating with a lighter, of knwon type, provided on a motor vehicle dashboard, for example a car dashboard. Thus, owing to the disclosed cooperation, the motor 18 can be power supplied by the conventional motor vehicle battery assembly.

The cable 25 also supplies the projector element 19 comprising a conventional light source (lamp 30), of a per se known type, a pair of concave (with respect to the lamp) lenses 31 operating as a reflecting element and a plurality of lenses 32 which define a light condenser. This projector element can be arranged within the recess 10 of the box 8 for reading the tape 19.

At the mentioned condenser there is arranged the objective 20; between said objective and said condenser, there is arranged a conventional window 35 of the box 8, having two clear transparent elements 36, therebetween said tape or microfilm 9 is caused to pass.

The lenses 31, lamp 30, condenser 32 and objective 20 are supported by respective supporting portions 40, 41, 42 and 43 restrained to the base 4.

The reflecting element comprises a flat surface 45, a face 46 of which is illuminated.

The display element 12, in turn, comprises a conventional clear screen 48, to which there is coupled a liquid crystal panel 49 of the dot matrix type.

The latter, which can comprise a plurality of matrix arranged lamps, is coupled (as shown in figure 3) to a conventional signal decoder unit 50 which is coupled to a central processing unit 51, advantageously of the microprocessor type. This unit is provided for controlling the operation of the device 1 and receives signals from an user through an interface 52 provided with a plurality of push-buttons, for example 52A, 52B and 52C.

Said unit is moreover coupled to and controls or drives the motor 18 and projector element 19, and receives data from conventional presence sensors 54 associated with the base 4 to detect the movement of the tape or microfilm 9 as it is read out.

In order to use the device 1, suppose that an user desires to locate on the microfilm 9, bearing a map of a town, a desired road or street.

In order to locate this road, the box 8 is introduced into the recess 5 (according to the arrow C of figure 1) so as to arrange the shafts 6 within the wheels 7.

Then, upon turning on the device 1 (or, more specifically, the circuit shown in figure 3), which is made, for example, by introducing the plug element 27 into the motor vehicle lighter, the unit or microprocessor 51 will quickly read the tape 9 and will arrange it, according to a suitable and preset comparing algorithm, of a per se known type, at a conventional index of the localities (roads) filmed on the microfilm.

In particular, the micrprocessor 51 will enable the element 19 which will project said index on the element 21, which, in turn, will reflect it on the display element 12. In this connection it should be apparent that the latter will have been withdrawn from the recess 11 in order to provide a clear display. If desired, holding means can be also provided for restraining said display element in its withdrawn position.

Then, by causing the tape to advance by operating a suitable push-button of the interface 12, the user causes the above mentioned index to slide on the display element 12.

After having found the desired road, the user, by means of the interface 52, will apply to the unit 51 the code or coordinate or coordinates related to said road (or to a desired locality).

Said unit 51 will cause the tape 9 to advance to that point which corresponds to that selected by means of the code.

This is obtained by the above mentioned unit which controls the motor 18 and receives the signals coming from the presence sensor. Such a sensor is of a type adapted to count conventional notches or reference marks corresponding to the individual photograms of the tape 9, the unit 51, based on the mentioned count, detecting the selected photogram code.

After having selected the photogram of the zone in which is arranged the desired road, this photogram will be projected on the screen 18 by the procedure which has been already disclosed.

Then, the unit 51 will actuate the panel or matrix 49, by giving prominence to the matrix portion corresponding to the coordinates of the road selected by the user, so that the user can detect the precise location of the road.

It should be pointed out that, in the case of maps of towns, the first addressing of the unit 51, performed through the interface 12, is carried out on the image representing the overall town; then, there is given prominence (there being stressed) to the point relating to the zone of the road which is desired. A further command from the keyboard will allow the road to be diplayed as above disclosed.

This step of providing an "overall" display of the town or "detail" thereof, can be always selected at will by the user.

Such a possibility is very useful, since it is not always necessary to know the particular location of a road, but it is sufficient to only know the zone of the town in which this road is located.

A further feature of the device is that it comprises a store provided for storing the code of the last selected address and to recover it at will.

This allows the user to compare two different roads of a same town, so as to evaluate the distances of said roads and the most convenient path to reach these roads.

At the end of the read-out of the tape 9, the cartridge 8 is ejected from the recess 5 in any known ways.

A further modification provides to connect to the circuit of figure 3 (see this figure) a further and conventional ROM store 74 which holds all of the data related to the roads or streets of a zone, town or the like, said ROM being removably coupled to the central processing unit 51.

Thus, by operating on the interface 52 or possible on a further interface 73, the user can read out from the store 74 the interesting data, by typing on this interface the name of the selected locality (for example a street or road), without the need of recovering the corresponding coordinates or codes from the index of the map.

Upon having selected the locality, to the unit 51 there is immediately and directly sent the code which corresponds to said locality and, at this time, the unit or microprocessor 51 will search, by the already disclosed procedure, this locality on the tape 9 and will project it on the screen.

It should be apparent that the store 74 can be a removable type of store which can be replaced by like stores, but relating to other towns, regions or countries.

Alternatively, the device can also be made based on other procedures, for example by directly projecting the photogram, without any element 21, on the screen 12, or providing a fixed screen or other types of control units.

These modifications are considered as falling within the scope of the invention.

The device 1 has a small size base 4 and body 2, so that said device can be easily used in the compartment of a motor vehicle and, moreover, can be easily transported.

**Claims**

1.  A hand-held device for reading microfilms, bearing in particular maps of regions, towns or countries, said microfilms being arranged on tapes supported on removable supporting elements where they can be wound or unwound at will, characterized in that said device comprises a supporting element (4) having a small size adapted to facilitate the transport and use of said device advantageously in a compartment of a motor vehicle, with said supporting element (4) there being associated driving means (18) for unwinding or re-winding said microfilm (9) tape, optical means (19) for projecting said microfilm (9) on at least a display (12) and control and search means (51) for controlling said driving means (18) and optical means (19), said control means (51) controlling, depending on a requirement of an user submitted through at least an interface (52), said means (18, 19) in order to locate a portion of said tape corresponding to said requirement and to display said portion on said display (12).

2.  A device according to Claim 1, characterized in that said driving means comprises an electric motor (18), advantageously of the low voltage type, which controls, in a known per se way, shafts (6) cooperating with gear wheels (7) of said removable supporting element in order to wind and/or unwind said microfilmed tape (9).

3. A device according to Claim 2, characterized in that said shafts (6) are arranged in a recess (5) provided in a portion (3) which can be superimposed on said supporting element (4) to define the body (2) of the device (1), said portion (3) being provided with a further recess (11) therefrom said display element (12) projects.

4. A device according to Claim 1, characterized in that said device is power supplied by an electric cable (25) having, at a free end (26) thereof, a conventional plug element (27) cooperating with a lighter of said motor vehicle.

5. A device according to Cliam 1, characterized in that said optical means (19) comprise a light source (30) arranged between a light reflecting element (31) and a light condenser element (32), said optical means cooperating with a conventional objective (20) for the projection of the microfilm (9), the latter being arranged to be read-out between said objective and said optical means.

6. A device according to Claim 1, characterized in that said control and search means comprise a control unit (51), advantageously of a microprocessor type.

7. A device according to Claim 6, characterized in that said control and search means (51) are coupled to sensor means (54) adapted to detect the unwinding and winding of the tape (9) from/on the supporting element (8) therefor.

8. A device according to Claim 1, characterized in that said display element comprises a clear screen (48) and individualizing means (49) for individualizing a portion of said screen.

9. A device according to Claim 8, characterized in that said individualizing means comprise a liquid crystal panel (49) of the dot matrix type.

10. A device according to Claim 8, characterized in that said display means comprise a plurality of matrix arranged lamps.

11. A device according to Claim 1, characterized in that the light beam generated by said optical means (19) cooperates with at least a reflecting element (21) adapted to deflect said beam toward said said display element (12).

12. A device according to Claim 1, characterized in that said device comprises an interface (73) adapted to cooperate with a ROM store (74) which can be coupled to said control and search means (51), said store being removably connected to said device (1).

13. A device according to Claim 1, characterized in that said display element (12) is fixed.

14. A device according to Claim 1, characterized in that said display element (12) is movable.

Fig. 1

Fig. 3

Fig. 2

Fig. 4

Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 446 520 (VATAN,P.G. & AL. ; FR)<br><br>* the whole document *<br>--- | 1,2,5,6,<br>8,11,14 | G09B29/10<br>G03B21/30 |
| X | EP-A-0 154 195 (FUJI PHOTO FILM CO.,LTD)<br><br>* page 9, line 16 - page 45, line 12; claims 1-6; figures 1-27 *<br>--- | 1-6,8,<br>11,12,14 | |
| X | EP-A-0 244 853 (FUJI PHOTO FILM CO.,LTD)<br><br>* column 4, line 54 - column 18, line 4; claims 1-19; figures 1-14 *<br>--- | 1-6,8,<br>11,12,14 | |
| X | DE-A-3 438 576 (LORENZ,KLAUS & AL.; DE)<br><br>* the whole document *<br>--- | 1-3,5-8,<br>11,12,14 | |
| A | FR-A-2 576 428 (CLAULIN,G.; FR)<br><br>* page 2, line 1 - page 3, line 5; claims 1-5; figures 1-3 *<br>--- | 1,3,5,8,<br>11,14 | **TECHNICAL FIELDS SEARCHED (Int. Cl.5)** |
| A | US-A-4 437 739 (BALL L.L.; US)<br><br>* column 2, line 18 - column 4, line 38; claims 1-3; figures 1-7 *<br>--- | 1,5,8,<br>11,14 | G09B<br>G03B |
| A | DE-A-3 337 253 (MAYER,K.; DE)<br>* page 9, line 7 - page 13, line 6; claims 1-8; figures 1-3 *<br><br>----- | 1,4,13 | |

The present search report has been drawn up for all claims

| Place of search | Date of completion of the search | Examiner |
|---|---|---|
| THE HAGUE | 04 MAY 1992 | GORUN M. |

EPO FORM 1503 03.82 (P0401)